# EUROPEAN PATENT APPLICATION

(11) **EP 4 745 397 A1**
(43) Date of publication of application: **20.05.2026**
(21) Application number: 25215406.7
(22) Date of filing: 12.11.2025
(51) Int. Cl.: F03D 3/00, F03D 3/02, F03D 3/04, F03D 7/02

(54) **VERTICAL AXIS WIND TURBINE POWER WITH AERODYNAMIC BRAKE**

(30) Priority: 13.11.2024 PL 45025024
(71) Applicant: Jezewska, Elzbieta, 55-200 Olawa (PL); Jezewski, Andrzej, 55-200 Olawa (PL)
(72) Inventor: Jezewska, Elzbieta, 55-200 Olawa (PL); Jezewski, Andrzej, 55-200 Olawa (PL); Jezewski, Wojciech, 55-200 Olawa (PL); Jezewska, Elzbieta, 55-200 Olawa (PL)
(74) Representative: Gornicki, Pawel

(57) **Abstract**

A vertical axis wind turbine (VAWT) power featuring an aerodynamic brake, comprising a rotor permanently coupled to a rotating shaft which is further linked to an electric generator. The turbine is characterized in that it includes at least a lower module **(B)** rotor and at least an upper rotor **(A),** wherein these rotors are permanently mounted on a common rotating axis at different axial heights, and the rotor of the lower module **(B)** is a Savonius-type drag rotor equipped with external flow guides while the upper rotor **(A)** serves as a lift-driven drive rotor, characterized in that the linear speed of its blades exceeds the velocity of the undisturbed incoming wind, and its arms are symmetrically spaced relative to the main axis.

## Description

The present invention relates to a vertical axis wind turbine (VAWT) featuring aerodynamic brake.

The invention can be used to produce electricity from a renewable energy source such as wind.

A vertical axis wind turbine (VAWT) utilizing a Darrieus rotor, particularly an H-rotor configuration, operates based on the principle of aerodynamic lift. The linear tip speed of the blades exceeds the velocity of the undisturbed incoming wind. At wind speeds of up to 15 m/s, these turbines attain critical rotational speeds, thereby necessitating the limitation of the rotation speed via braking.

A vertical axis wind turbine (VAWT) employing a Savonius rotor exhibits lower efficiency compared to other turbine types of comparable dimensions and its power coefficient typically ranges from 0.05 to 0.30. Guide vanes are employed to direct the airflow toward the rotor. The efficiency of these turbines, when defined as the ratio of generated power to the kinetic energy of the undisturbed wind within the swept area of the rotor, can reach up to 50%. Due to its low rotational speed, the turbine is inefficient for the purpose of generating electrical power. A key advantage is that the turbine does not require any wind direction guidance system. Savonius designs are characterised by operational capability even at extremely low wind speeds and consistent performance regardless of the wind direction - omnidirectional operation.

The operation of a wind turbine is strictly confined to a precise range of wind speeds, bound by the cut-in speed (for starting power generation) and the cut-out speed (for safety and protection). When the cut-out wind speed limit is reached, the turbine must be deactivated, which triggers the engagement of the standard mechanical brake fitted to the wind turbine.

Should the primary braking system malfunction, the rotor will accelerate uncontrollably at overspeed. Consequently, the safety (aerodynamic) braking system, which engages at predefined rotational speeds, constitutes a critical safety feature.

Electric brakes for wind turbines are a known technology, typically comprising star-connected resistors integrated into the turbine's electrical generation circuit. Their function is to sink electrical energy from the generator and convert this energy into thermal energy through the resistors in the absence of an external circuit load. Energy dissipation is initiated after the system voltage exceeds the predetermined threshold, which typically corresponds to a wind speed of approximately 25 m/s.

Disc brakes, drum brakes, and resistor brakes collectively function to regulate the turbine speed and maintain operation within a safe rotational speed range. In practice, however, these braking systems are considered short-term solutions due to the high failure rate of their components (discs, drums, and linings) and the efficiency reduction caused by high operating temperatures, which precludes long-term reliable operation.

Chinese Utility Model CN201925098 discloses a butterfly-type vertical axis wind turbine that incorporates three Darrieus airfoils and three Savonius fan covers and within this assembly, a fixed inner shaft is mounted on a fan mounting base, and the inner races of the upper and lower bearings are sleeved onto this fixed inner shaft. Both terminal ends of the Darrieus airfoils are respectively secured to the upper and lower mounting sockets; similarly, both ends of the Savonius fan covers are also connected to the corresponding upper and lower sockets. This configuration of vertical axis wind turbine blades serves to mitigate the drag experienced by the Darrieus airfoils during airflow, while simultaneously augmenting the lift force and thereby effectively increasing the efficiency of wind energy conversion.

Polish Patent PL231149B1 discloses a wind turbine rotor featuring two blades positioned at a phase angle that deviates from the standard 180° separation. This modification allows for an increase in the safe operational speed of the rotor, thereby augmenting the turbine's power output. A counterweight is affixed to the rotor hub within the obtuse angle formed between the rotor blades and this counterweight rotates integrally with the blades, thereby balancing the inertial forces imposed on the turbine structure due to the rotor's rotation in the hub. An additional function of the counterweight is to serve as an aerodynamic brake in the event of a malfunction of the primary mechanical braking system. However, a counterweight acting as an emergency air brake does not constitute a comprehensive aerodynamic braking solution for operation within the upper wind speed range.

The technical problem addressed herein is that existing solutions rely on controlling the excessive rotational speed (overspeed) of a vertical axis wind turbine (VAWT) using mechanical devices, specifically drum, disc, and resistor brakes, all of which impart significant load onto the turbine shaft and ultimately bring the rotor to a complete stop. Consequently, this leads to a reduction in overall energy yield, as the turbine is forced to cease operation even when wind conditions are still suitable for power generation.

As a market standard for commercially available vertical axis wind turbines (VAWTs), the resistor braking system initiates turbine deactivation at a wind speed of 12 m/s and at this threshold, the anti-storm mode is activated, bringing the rotor speed down to 0 rpm.

The aim of the present invention was therefore to develop a vertical axis wind turbine (VAWT) design capable of limiting the turbine's rotational speed under critical overspeed conditions while maintaining continuous power output, thereby ensuring production continuity without turbine shutdown and eliminating the necessity of electronic braking systems.

Moreover, the turbine design is intended to be simple, cost-effective, and reliable, featuring a high energy production efficiency evidenced by rapid start-up at the minimum operational wind speed.

Unexpectedly, it was discovered that the permanent coupling of the drive rotor and the braking rotor along a common vertical axis at different axial heights enables an effective aerodynamic braking for the entire turbine assembly. Connecting the braking rotor shaft to the drive rotor shaft governs the turbine's speed under overspeed conditions and this mechanism ensures continuous operation and power output, completely circumventing the necessity of utilizing resistor, disc, or drum brakes.

Addressing the deficiencies observed in the brakes of the prior art, the system disclosed herein is designed to be inherently self-regulating up to the maximum operational velocity determined by the aerodynamic geometry of the lower module.

The essence of the present invention is a vertical axis wind turbine (VAWT) featuring aerodynamic brake, comprising a rotor permanently coupled to a rotating shaft which is further linked to an electric generator. The turbine is characterized in that it includes at least a lower module B rotor and at least an upper rotor A, wherein these rotors are permanently mounted on a common rotating axis at distinct axial heights. The rotor of the lower module B is a Savonius-type drag rotor equipped with external flow guides while the upper rotor A serves as a lift-driven drive rotor, characterized in that the linear speed of its blades exceeds the velocity of the undisturbed incoming wind, and its arms are symmetrically spaced relative to the main axis.

Advantageously, the upper rotor A is configured as an H-rotor (straight-bladed Darrieus) type.

It is further advantageous when the upper rotor A and the rotor of the lower module B are mounted coaxially on a single rotational axis.

In an alternative embodiment of the invention, the shaft of the upper rotor (A) and the shaft of the lower rotor (B) are rigidly coupled via a connecting flange.

In an alternative embodiment, the upper rotor shaft and the lower rotor shaft are interconnected via a rigid elastomer coupling.

A key advantage of the present invention is that the turbine regulates its rotational speed during critical overspeed conditions while simultaneously maintaining constant power output and this design ensures continuity of production without requiring forced shutdown and eliminates the need for auxiliary resistor braking systems.

The braking mechanism's principle of operation is derived from the shape of its aerodynamic profile; specifically, its inherent geometry prevents the drive rotor located above the braking rotor from attaining a hazardous speed level that, in conventional systems, is typically controlled by electronic resistors.

An additional advantage is that the drag-type (resistance) turbine, permanently integrated with the rotational axis, contributes to the starting torque and this mechanism assists the lift-driven drive rotor also permanently connected to the same axis in reaching its required cut-in speed more quickly.

A further advantage lies in the modular construction of the turbine in the present invention, which allows for assembly from pre-fabricated modules, each having its rotor already secured to a shaft, by rigidly connecting these respective shafts. The approach offers simplicity and expediency in designing a new turbine configuration that inherently incorporates a dependable aerodynamic brake.

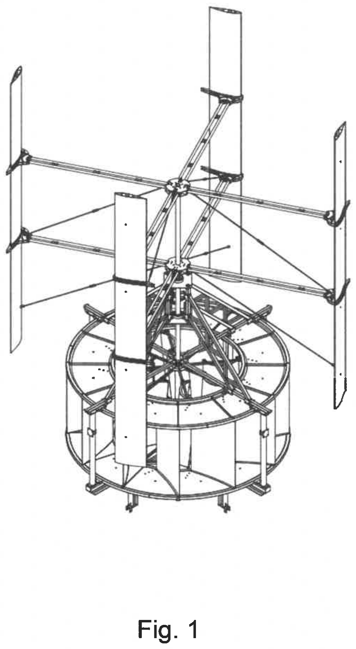

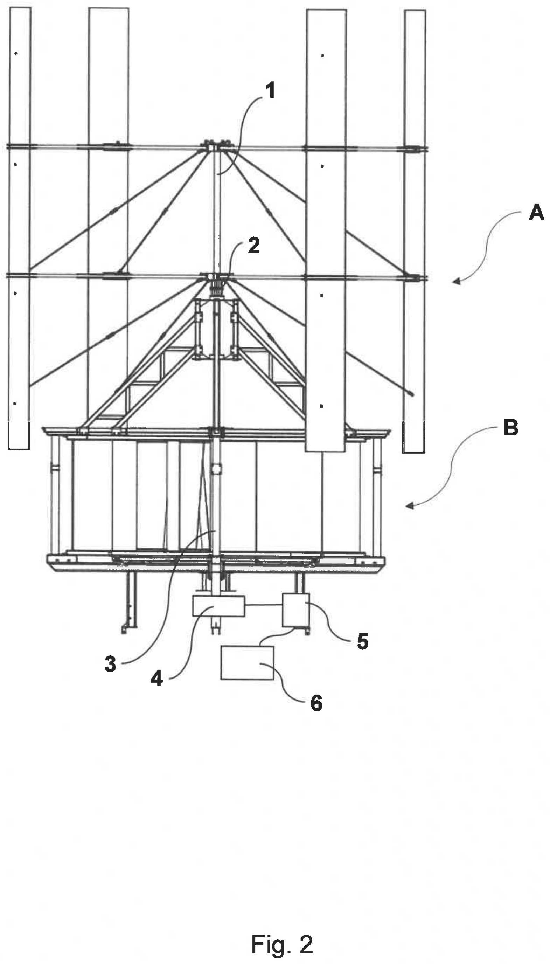

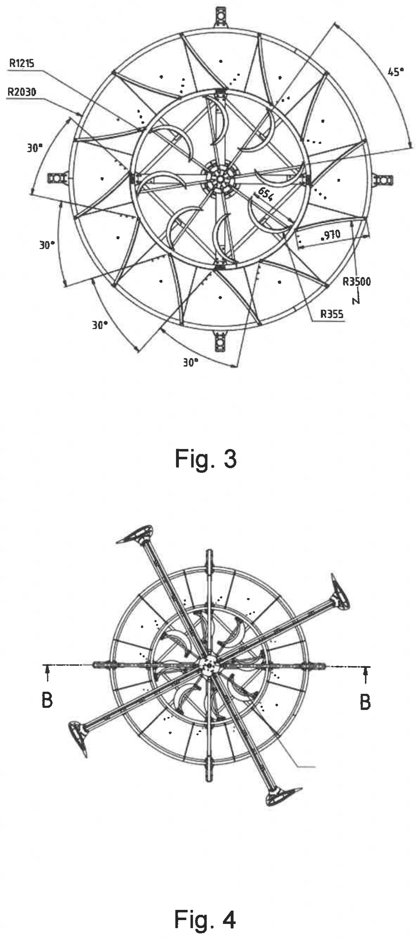

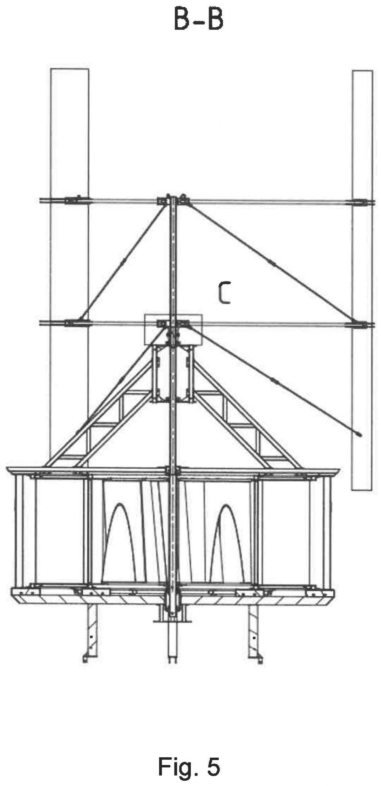

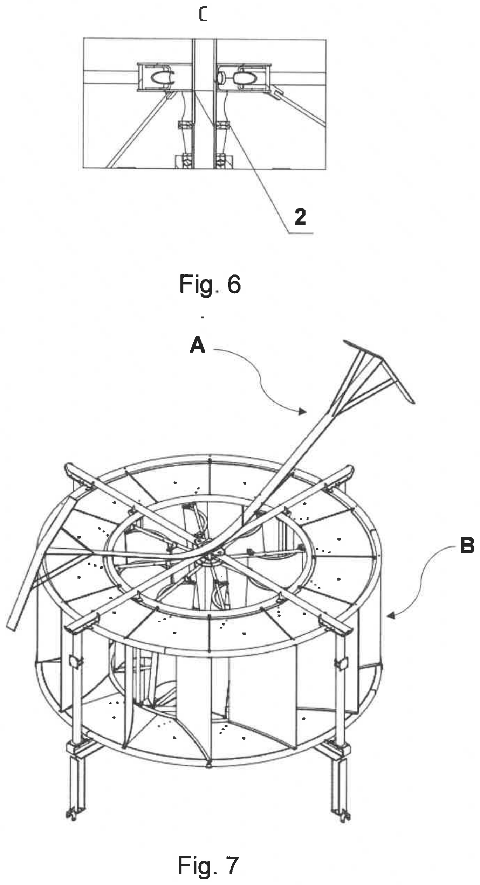

The invention is further detailed with reference to its embodiment examples and the drawing figures, where Fig. 1 presents a general view of the turbine with the upper H-rotor, Fig. 2 shows a front view including an electrical connection diagram, Fig. 3 provides a top view of the lower module B, Fig. 4 is a top view of the turbine shown in Fig. 2, Fig. 5 illustrates the turbine in a longitudinal section B-B, marking detail C, Fig. 6 depicts detail C, which is the flange connection between the rotor shafts, and Fig. 7 shows a variant of the turbine with an alternative upper rotor design.

It should be understood that the number of blades comprising the upper rotor A is not limited to the specific quantity disclosed in the embodiments.

### Embodiment 1:

The lower module **B** of the vertical axis wind turbine (VAWT) incorporates a Savonius-type drum rotor, which is permanently affixed to a rotating shaft **3** that is journaled within bearings contained in a housing. The housing is composed of an upper disc and a lower disc connected to the exterior of the rotor assembly by connectors and guide vanes, which are configured as helically twisted, arc-shaped airfoils. The rotor consists of eight arms (blades) featuring a profile resembling a segment of a cylinder. The dimensions of the individual elements are detailed in Fig. 3, with the rotor height being 1500 mm. The differential wind forces acting upon the concave and convex sides of the blades induce the rotation of the rotor.

The rotor of the lower module B can be readily configured with two, three, or four blades, and may additionally incorporate a mechanism for adjusting the pitch. The blades are required to be symmetrically arranged about the axis of rotation to ensure dynamic balance.

The upper rotor **A** is an H-rotor turbine utilizing blades with a closed aerodynamic profile (airfoil). This rotor operates based on aerodynamic lift force, characterised by a linear blade speed that exceeds the velocity of the undisturbed incoming wind. The four blades are uniformly distributed around the circumference of the vertical rotor axis. The blades were characterized by a height (span) of 7980 mm and a chord length of 2900 mm, resulting in a total working area (planform area) of 10.2 m².

The rotating shaft of the lower module B and the rotating shaft of the upper rotor A are rigidly coupled to one another using the connecting flange 2, as illustrated in Fig. 6. This integrated shaft assembly inherently precludes any difference in the angular velocity between the upper and lower rotors.

The lower rotor shaft **3** is mechanically coupled to the electric generator **4.** The electric generator **4** is electrically connected to the inverter **5,** which is then coupled to the power grid **6.**

All other necessary elements for electrical power generation and its subsequent transmission or storage, such as controllers and electrical/mechanical connections (e.g., rotor-to-shaft couplings), are well-known in the art, and their implementation within the described system requires no undue effort from a specialized technician.

Comparative tests were conducted on two distinct configurations - a baseline vertical axis wind turbine (VAWT) featuring an H-rotor and equipped solely with a resistor brake and no aerodynamic brake (data presented in Table 1) - and the turbine configuration according to the present invention, wherein the H-rotor served as the upper rotor **A** without an electric brake, but was integrated with the aerodynamic braking lower module **B** as described in Embodiment 1 (data presented in Table 2).

The experimental results demonstrated that the turbine initiates rotation and generation (cut-in speed) at 1.5 m/s and sustained energy generation up to wind gusts of 20 m/s and the figure of 20 m/s merely represents the maximum velocity attainable during testing and does not preclude the continued operation of the turbine, including its brake system, at higher wind speeds.

Table 2 demonstrates the practical operating range of the vertical axis wind turbine according to the invention, wherein power generation commences at 2 m/s and ceases at 15 m/s. At these wind speeds, the turbine operates unrestricted and maintains a maximum rotational velocity of 90 rpm and even with increasing wind speeds, the turbine continues to operate at this maximum speed limit, ensuring continuous energy generation. The rotor of the lower module B functions as an aerodynamic brake, effectively preventing further acceleration of the upper rotor A, which governs the rotational speed of the entire turbine assembly, maintaining it constant above the 12 m/s wind speed threshold.

Additionally, the lower module B facilitates a faster loading of the turbine, thereby aiding early initiation of power generation, as it drives the upper rotor A effectively at low wind speeds. Under identical operating conditions, a standard turbine subjected to low wind speeds while under load would decelerate to a stall.

**Table 1. Characteristics of a state-of-the-art vertical axis wind turbine with a resistor brake**

| Wind speed [m/s] | Rotation speed [rpm] | Status | Power [W] | kWh/year |
|---|---|---|---|---|
| 1 | 4 | Idle | 0 0 | 30,000 |
| 2 | 8 | Idle | 0 | |
| 3 | 15 | Electricity generation | 800 | |
| 4 | 22 | Electricity generation | 1900 | |
| 5 | 30 | Electricity generation | 3600 | |
| 6 | 37 | Electricity generation | 6300 | |
| 7 | 43 | Electricity generation | 10800 | |
| 8 | 52 | Electricity generation | 15600 | |
| 9 | 60 | Electricity generation | 17400 | |
| 10 | 70 | Electricity generation | 18200 | |
| 12 | 80 | Electricity generation | 19800 | |
| 14 | 0 | Storm mode - turbine stopped | 0 | |
| 15 | 0 | Storm mode - turbine stopped | 0 | |
| 16 | 0 | Storm mode - turbine stopped | 0 | |

**Table 2. Characteristics of a vertical axis wind turbine with an aerodynamic brake according to the invention.**

| Wind speed [m/s] | Rotation speed [rpm] | Status | Power [W] | kWh/year |
|---|---|---|---|---|
| 1 | 4 | Idle | 0 | |
| 2 | 8 | Electricity generation | 300 | 36,000 |
| 3 | 15 | Electricity generation | 800 | |
| | | | | |

| Wind speed [m/s] | Rotation speed [rpm] | Status | Power [W] | kWh/year |
|---|---|---|---|---|
| 4 | 22 | Electricity generation | 1900 | |
| 5 | 30 | Electricity generation | 3600 | 36,000 |
| 6 | 37 | Electricity generation | 6300 | |
| 7 | 43 | Electricity generation | 10800 | |
| 8 | 52 | Electricity generation | 15600 | |
| 9 | 60 | Electricity generation | 17400 | |
| 10 | 70 | Electricity generation | 18200 | |
| 12 | 80 | Electricity generation | 19800 | |
| 14 | 90 | Electricity generation / max speed | 20300 | |
| 15 | 90 | Electricity generation / max speed | 20300 | |
| 16 | 90 | Electricity generation / max speed | 20000 | |

In the present invention, the geometry and optimized setting of the inlet guide vanes for the lower module B establish the operational safety of the entire turbine. In such a system, the turbine is aerodynamically constrained from achieving a rotational speed that would pose a risk of mechanical failure.

The braking mechanism's principle of operation is derived from the shape of its aerodynamic profile; specifically, its inherent geometry prevents the drive turbine located axially above it from attaining a hazardous rotational speed that, in conventional systems, is typically controlled by electronic resistors.

The invention may also be utilised in the generation of electricity destined for storage in rechargeable batteries.

### Embodiment 2:

A vertical axis wind turbine as defined in Embodiment 1, wherein the lower rotor shaft **3** and the upper rotor shaft **1** are coupled by a rigid coupling element.

### Embodiment 3:

A vertical axis wind turbine as defined in Embodiment 1, wherein the upper rotor **A** and the rotor of the lower module **B** are coaxially mounted on a single rotational axis.

### Embodiment 4:

A vertical axis wind turbine as defined in Embodiment 1, wherein the upper rotor **A** is a turbine featuring two arms set at an acute angle relative to the vertical axis of rotation, terminating in drive blades, thereby creating a V-rotor type aerogenerator.

## Claims

1. A vertical axis wind turbine (VAWT) power featuring an aerodynamic brake, comprising a rotor permanently coupled to a rotating shaft which is further linked to an electric generator, **characterized in that** it includes at least a lower module (**B**) rotor and at least an upper rotor (**A**), wherein these rotors are permanently mounted on a common rotating axis at different axial heights, and the rotor of the lower module (**B**) is a Savonius-type drag rotor equipped with external flow guides while the upper rotor (**A**) serves as a lift-driven drive rotor, **characterized in that** the linear speed of its blades exceeds the velocity of the undisturbed incoming wind, and its arms are symmetrically spaced relative to the main axis.

2. A wind turbine according to claim 1, **characterised in that** the upper rotor (**A**) is of the H-rotor type.

3. A wind turbine according to claim 1, **characterised in that** the upper rotor (**A**) and the rotor of the lower module (**B**) are coaxially mounted on a single rotational axis.

4. A wind turbine according to claim 1, **characterised in that** the upper rotor shaft (**1**) and the lower rotor shaft (**3**) are rigidly coupled via a connecting flange (**2**).

5. A wind turbine according to claim 1, **characterised in that** the upper rotor shaft (**1**) and the lower rotor shaft (**3**) are interconnected via a rigid elastomer coupling.
